# EUROPEAN PATENT SPECIFICATION

(11) **EP 3 509 187 B1**
(45) Date of publication and mention of the grant of the patent: **15.12.2021**
(21) Application number: 17846952.4
(22) Date of filing: 29.08.2017
(51) Int. Cl.: H02K 1/14, B62D 5/04, H02K 21/16, H02K 29/03

(54) **STATOR, AND MOTOR COMPRISING SAME**
STATOR UND MOTOR DAMIT
STATOR ET MOTEUR LE COMPRENANT

(30) Priority: 05.09.2016 KR 20160114086; 31.01.2017 KR 20170013935
(43) Date of publication of application: 10.07.2019
(73) Proprietor: LG Innotek Co., Ltd., Seoul 04637 (KR)
(72) Inventor: WOO, Shung Hun, Seoul 04637 (KR); PYEON, Jin Su, Seoul 04637 (KR)
(74) Representative: Novagraaf Technologies
(86) International application number: PCT/KR2017/009410
(87) International publication number: WO 2018/044027

(56) References cited:
- EP-A1- 2 378 627
- EP-A2- 0 709 947
- EP-B9- 2 378 627
- WO-A1-2008/050637
- WO-A2-2011/149245
- DE-A1-102015 210 198
- JP-A- 2009 189 163
- JP-A- 2009 189 163
- JP-A- 2010 172 063
- JP-A- 2010 172 063
- JP-A- 2011 067 090
- JP-A- 2015 070 663
- KR-B1- 100 589 817
- KR-B1- 100 589 817
- US-A- 6 104 117
- US-A1- 2010 156 226
- US-A1- 2012 025 665

## Description

### [Technical Field]

Embodiments relate to a motor.

### [Background Art]

Documents EP 2 378 627 A1, US 6 104 117 A, JP 2010 172063 A, JP 2009 189163 A, WO 2011/149245 A2, DE 10 2015 210198 A1, WO 2008/050637 A1, KR 100 589 817 B1 and US 2010/156226 A1 relate to a motor.

A motor is a device which obtains torque by converting electrical energy into mechanical energy and is generally used for a vehicle, home appliances, industrial apparatuses, and the like.

The motor may include a housing, a rotating shaft, a stator disposed on an inner circumferential surface of the housing, a rotor installed on an outer circumferential surface of the rotating shaft, and the like. Here, the stator of the motor causes an electrical interaction with the rotor and induces the rotor to rotate.

Particularly, the motor may be used for a device for securing stability in steering of a vehicle. For example, the motor may be used for an auxiliary steering system using separate power.

Although auxiliary steering devices using fluid pressure were previously used, recently, electronic power steering systems (EPS) with low power loss and having high accuracy have been used.

The EPS system is an apparatus capable of allowing a driver to safely drive a vehicle by securing stability in turning of the vehicle and providing a quick restoring force. The EPS system controls driving of a steering shaft of the vehicle by driving the motor through an electronic control unit (ECU) according to driving conditions sensed by a vehicle speed sensor, a torque angle sensor, a torque sensor, and the like.

The motor includes a stator and a rotor.

The stator may include a plurality of teeth which form a plurality of slots. The rotor may include a plurality of magnets arranged to face the teeth. Here, adjacent teeth are arranged to be spaced apart and form a slot opening. That is, the slot opening may be formed to prevent a leakage of flux between the adjacent teeth.

Accordingly, although the flux moves through a tooth side having high permeability while the rotor rotates, torque pulsation may occur due to a difference in permeability in a slot opening area.

Accordingly, while the rotor rotates, cogging torque may occur due to a difference in permeability between a stator core of a metal material and air in the slot opening which is an empty space. Since the cogging torque is a cause of noise and vibration, a reduction in cogging torque is more important to increase quality of the motor.

### [Disclosure]

### [Technical Problem]

The present invention is directed to providing a motor capable of improving quality by reducing cogging torque and torque ripple.

Aspects of the embodiment are not limited to the above-stated aspect and other unstated aspects can be clearly understood by those skilled in the art from the following description.

### [Technical Solution]

One aspect of the present invention provides a motor according to claim 1. Further aspects of the present invention are provided by the motor according to the dependent claims 2-5.

### [Advantageous Effects]

A motor according to the invention provides an advantageous effect of greatly reducing cogging torque by increasing a main cogging degree using grooves formed on teeth of a stator.

Also, the motor may increase motor quality by reducing cogging torque and torque ripple using grooves having a semicircular shape.

Here, the quality may be further improved, while maintaining motor performance, by limiting a position of the groove on the basis of a slot opening and limiting a radius of the groove on the basis of an air gap.

A variety of advantages and effects of the present invention are not limited to the above description and will be more easily understood in a process of describing detailed embodiments of the present invention. In the following detailed embodiments of motors not forming part of the present invention -namely with no grooves or square grooves arranged on the shoe- are described in order to outline the inventive effects of the invention. They are presented in comparison with embodiments according to the invention which comprise a shoe with semi-circular grooves.

### [Description of Drawings]

FIG. 1 is a view of a motor according to an embodiment;
FIG. 2 is a view illustrating a stator and a rotor not forming part of the present invention;
FIG. 3 is a view illustrating a groove of a tooth not forming part of the present invention;
FIG. 4 is a table illustrating a main cogging degree increased by the motor according to the embodiment;
FIG. 5 is a view illustrating a width of the groove not forming part of the present invention;
FIG. 6 is a table illustrating a change in a cogging torque waveform according to the width of the groove;
FIG. 7 is a view illustrating an angle between a body and a shoe of the tooth not forming part of the present invention;
FIG. 8 is a graph illustrating a change in cogging torque according to an angle between the body and the shoe of the tooth;
FIG. 9 is a graph illustrating a change in cogging ripple according to an angle between the body and the shoe of the tooth;
FIG. 10 is a graph illustrating a change in a cogging torque waveform according to an angle between the body and the shoe of the tooth;
FIG. 11 is a lateral cross-sectional view of the motor taken along a line A-A of FIG. 1 not forming part of the present invention;
FIG. 12 is a view illustrating an arrangement relationship between a stator core and the rotor of the motor according to the present invention;
FIG. 13 is a view illustrating the stator and the rotor in an area B1 of FIG. 12 according to the present invention;
FIG. 14 is a view illustrating the tooth and the grooves of the motor according to the present invention;
FIG. 15 is a view illustrating comparison between torques of the motor according to the embodiment and a motor without grooves;
FIG. 16 is a view illustrating cogging torque and torque ripple according to a radius of the groove and a distance of an air gap formed in the motor according to the embodiment;
FIG. 17 is a view illustrating a comparison between torques according to a radius of the groove and a distance of an air gap formed in the motor according to the embodiment;
FIG. 18 is a view illustrating cogging torque and torque ripple according to a position of a center C1 of the groove formed in the motor according to the embodiment;
FIG. 19 is a table illustrating performance of the motor according to the embodiment and a motor without grooves;
FIG. 20 is a view illustrating performance of the motor according to the embodiment and a motor without grooves at a room temperature;
FIG. 21 is a table illustrating performance of the motor according to the embodiment and a motor with square notches formed therein; and
FIG. 22 is a view illustrating performance of the motor according to the embodiment and a motor with square notches formed therein.

### [Modes of the Invention]

Although a variety of modifications and several embodiments of the present invention may be made, exemplary embodiments will be illustrated in the drawings and will be described. However, it should be understood that the present invention is not limited to the exemplary embodiments.

The terms including ordinal numbers such as "second," "first," and the like may be used for describing a variety of components. However, the components are not limited by the terms. The terms are used only for distinguishing one component from another component. For example, without departing from the scope of the present invention, a second component may be referred to as a first component, and similarly, a first component may be referred to as a second component. The term "and/or" includes any and all combinations of one or a plurality of associated listed items.

When it is stated that one component is "connected" or "joined" to another component, it should be understood that the one component may be directly connected or joined to the other component but another component may be present therebetween. On the other hand, when it is described that one component is "directly connected" or "directly joined" to another component, it should be understood that no other component is present therebetween.

While the embodiments are described, when any one component is described as being "on or under" another component, the two components may come into direct contact with each other or may come into indirect contact with each other with another component interposed therebetween. Also, the term "on or under" may include not only an upward direction but also a downward direction on the basis of one component.

Terms used herein are used merely for describing exemplary embodiments and are not intended to limit the present invention. Singular expressions, unless clearly defined otherwise in context, include plural expressions. Throughout the application, it should be understood that the terms "comprise," "have," and the like are used herein to specify the presence of stated features, numbers, steps, operations, elements, components or combinations thereof but do not preclude the presence or addition of one or more other features, numbers, steps, operations, elements, components, or combinations thereof.

Unless defined otherwise, the terms used herein including technical or scientific terms have the same meanings as those which are generally understood by one of ordinary skill in the art. Terms such as those defined in commonly used dictionaries should be construed as having meanings equal to contextual meanings of related art and should not be interpreted in an idealized or excessively formal sense unless defined otherwise herein.

Hereinafter, embodiments will be described in detail with reference to the attached drawings. Regardless of drawing signs, equal or corresponding elements will be referred to as like reference numerals and an overlapping description thereof will be omitted.

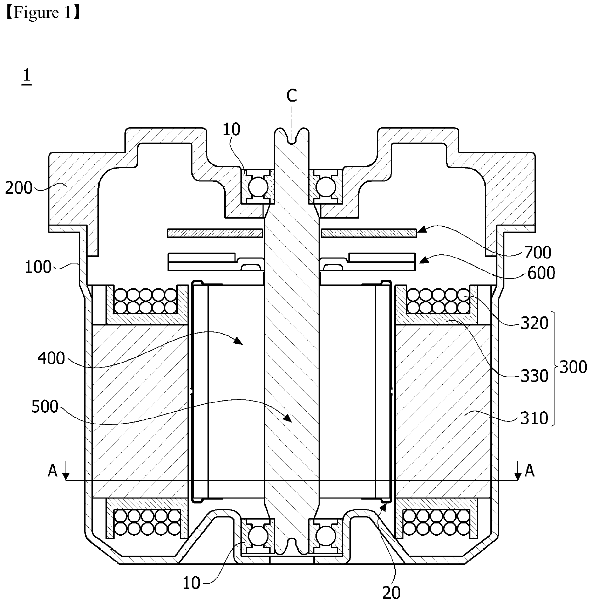

FIG. 1 is a longitudinal cross-sectional view of a motor according to an embodiment.

Referring to FIG. 1, a motor 1 according to the embodiment may include a housing 100, a bracket 200, a stator 300, a rotor 400, and a rotating shaft 500. Here, the bracket 200 may be disposed to cover an open top of the housing 100.

The housing 100 and the bracket 200 may form an outward form of the motor 1. Here, the housing 100 may have a cylindrical shape with an opening on top.

Accordingly, an accommodation space may be formed therein by a combination between the housing 100 and the bracket 200. Also, in the accommodation space, as shown in FIG. 1, the stator 300, the rotor 400, the rotating shaft 500, and the like may be arranged.

The housing 100 has a cylindrical shape such that the stator 300 may be disposed on an inner circumferential surface thereof to be supported. A pocket portion, which accommodates a bearing 10 supporting a bottom of the rotating shaft, may be provided on a bottom of the housing 100.

Also, a pocket portion supporting a top of the rotating shaft 500 may be provided in the bracket 200 disposed above the housing 100. Also, the bracket 200 may include a hole or a groove into which a connector, to which an external cable is connected, is inserted.

The stator 300 may be supported by the inner circumferential surface of the housing 100. Also, the stator 300 is disposed outside the rotor 400.

The stator 300 causes an electrical interaction with the rotor 400 and induces the rotor 400 to rotate.

The rotor 400 is disposed inside the stator 300. The rotor 400 may include a rotor core and a magnet combined with the rotor core. The rotor 400 may have the following forms which are classified according to a method of combining the rotor core with the magnet.

The rotor 400 may be embodied such that a magnet is combined with an outer circumferential surface of a rotor core. This type of rotor may include an additional can member 20 combined with the rotor core to prevent a separation of the magnet and to increase a combinational force therebetween. Otherwise, the magnet and the rotor core may be doubly injected to be integrally formed.

The rotor 400 may be embodied such that a magnet is combined with an inside of a rotor core. This type of rotor may include a pocket, into which the magnet is inserted, in the rotor core.

Meanwhile, the rotor core may be formed by stacking a plurality of plates having a thin steel plate shape. Otherwise, the rotor core may be embodied to have one cylindrical shape so as to not form a skew angle, and the magnet may be attached to the rotor core so as to not form a skew angle. Meanwhile, the rotor core may be formed by stacking a plurality of pucks (unit core) which form a skew angle.

The rotating shaft 500 may be combined with the rotor 400. When an electromagnetic interaction occurs between the stator 300 and the rotor 400 due to current supply, the rotor 400 rotates, and in connection therewith, the rotating shaft 500 rotates. The rotating shaft 500 may be connected to a steering shaft of a vehicle and may transfer power to the steering shaft. The rotating shaft 500 may be supported by the bearing 10 as shown in FIG. 1.

A sensing magnet assembly 600 is an apparatus which is combined with the rotating shaft 500 to be in connection with the rotor 400 so as to detect a position of the rotor 400.

The sensing magnet assembly 600 may include a sensing magnet and a sensing plate. The sensing magnet and the sensing plate may be combined with each other to be coaxial.

The sensing magnet may include a main magnet disposed in a circumferential direction to be adjacent to a hole forming an inner circumferential surface and a sub magnet formed on an edge. The main magnet may be disposed to be equal to a drive magnet which is inserted into the rotor 400 of the motor. The sub magnet is segmented more than the main magnet and includes a plurality of magnetic poles. Accordingly, it is possible to segment a magnet more, measure a rotation angle, and more easily drive the motor.

The sensing plate may be formed as a metallic circular-plate-shape. The sensing magnet may be combined with a top surface of the sensing plate. Also, the sensing plate may be combined with the rotating shaft 500. Here, a hole, through which the rotating shaft 500 passes, is formed in the sensing plate.

A sensor which senses a magnetic force of the sensing magnet may be disposed on a printed circuit board (PCB) 700.

Here, the sensor may be a hall integrated chip (IC). The sensor senses changes in the N pole and the S pole of the main magnet or the sub magnet and generates a sensing signal. Since at least three sensing signals for obtaining information on U, V, and W phases are necessary in the case of a three-phased brushless motor, at least three sensors may be arranged.

The PCB 700 may be combined with a bottom surface of the bracket 200 and be disposed on the sensing magnet assembly 600 such that the sensor faces the sensing magnet.

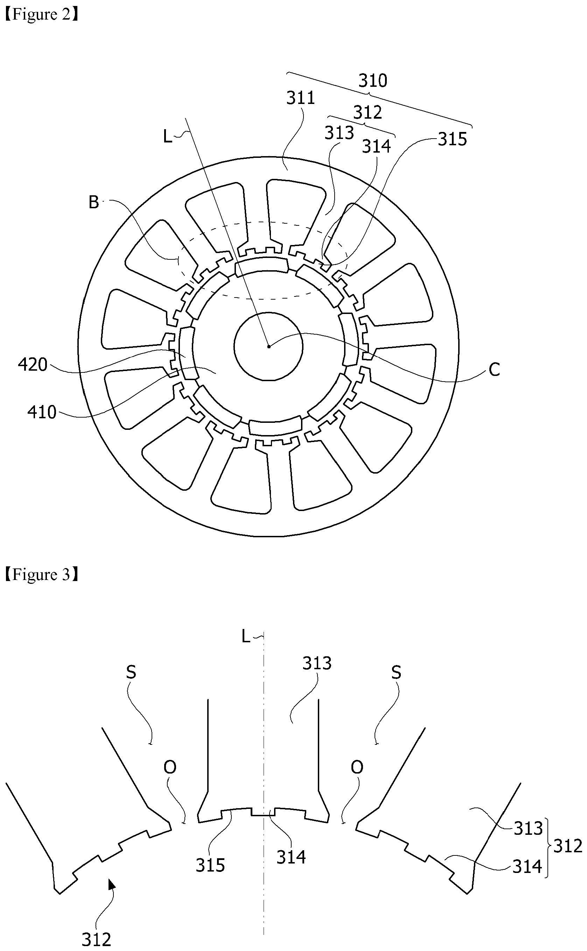

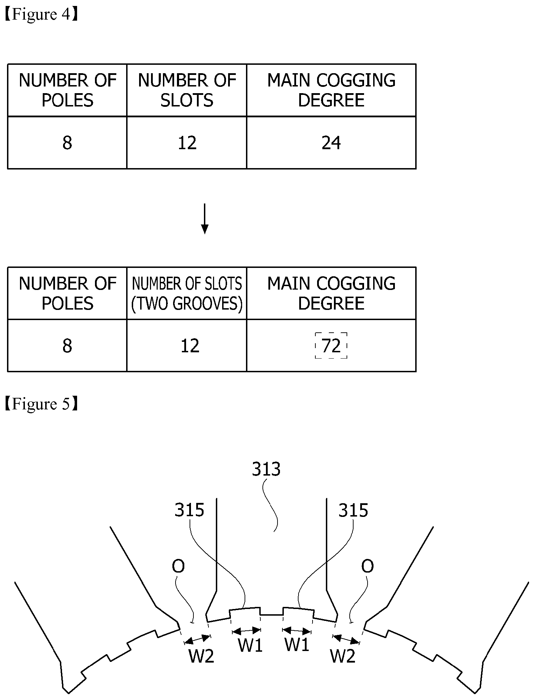

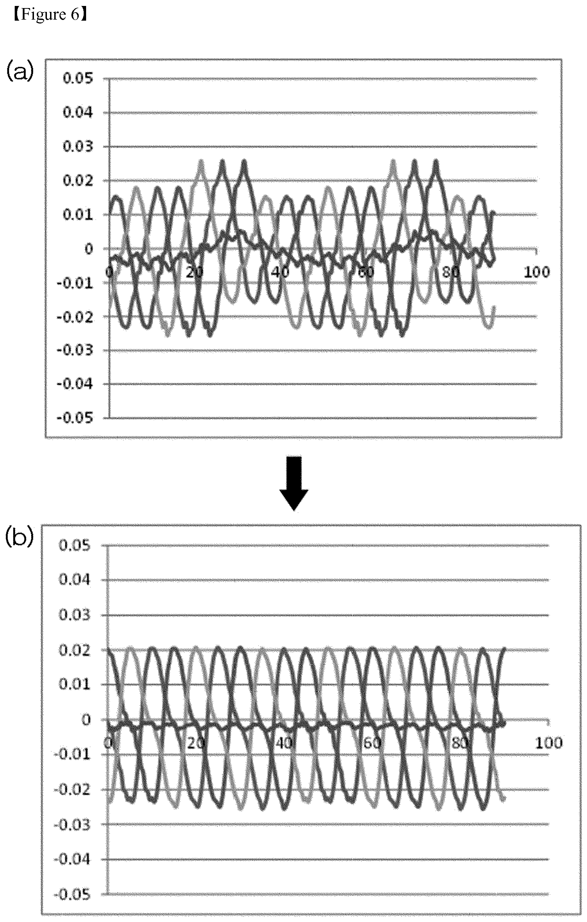

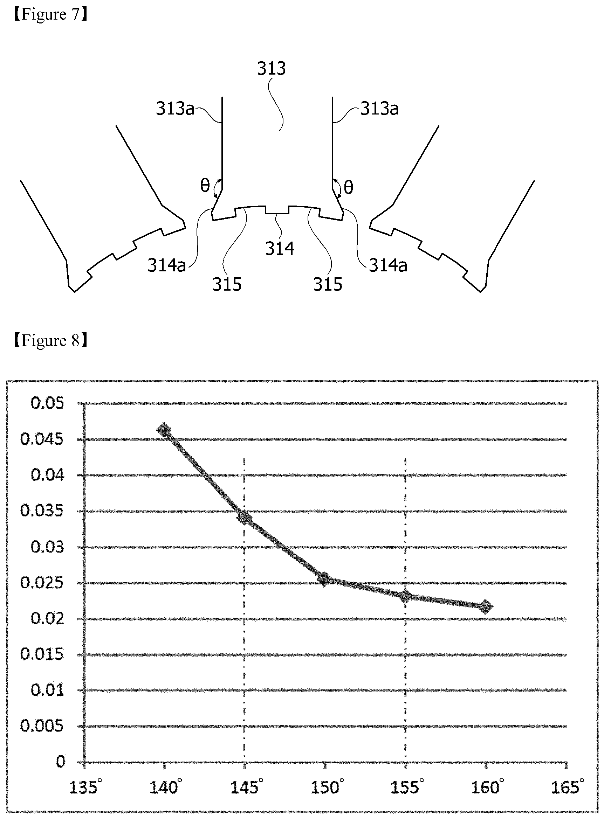

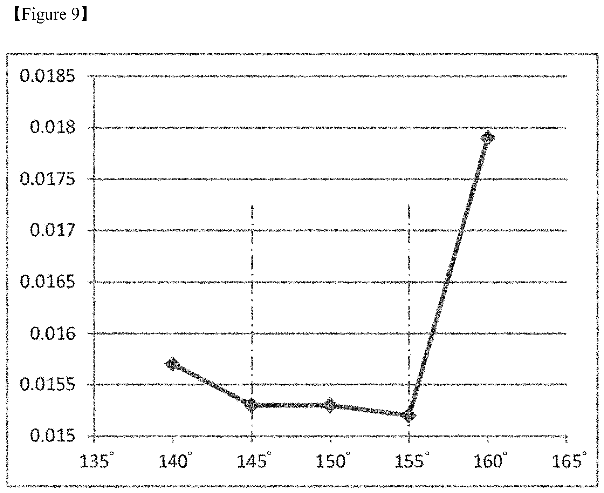

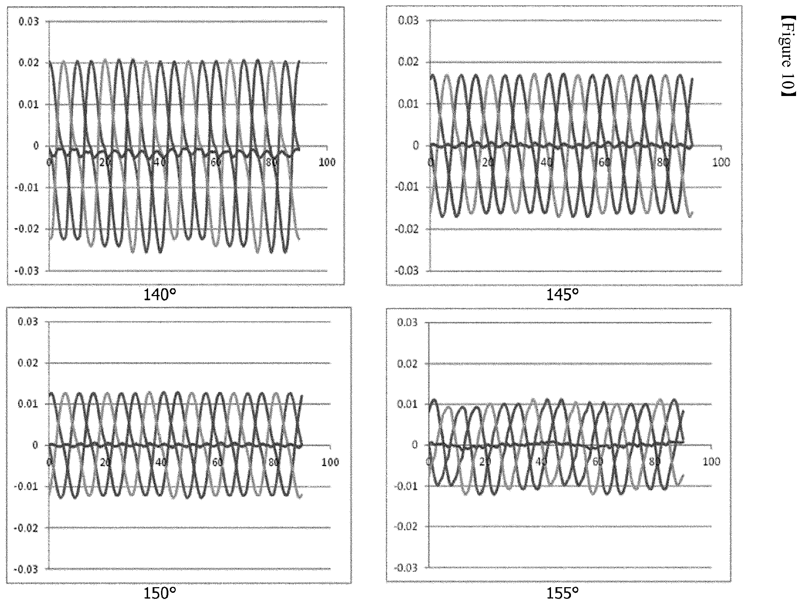

FIG. 2 is a view illustrating the stator and the rotor not forming part of the present invention, FIG. 3 is a view illustrating a groove of a tooth not forming part of the present invention, FIG. 4 is a table illustrating a main cogging degree increased by the motor according to the embodiment, FIG. 5 is a view illustrating a width of the groove not forming part of the present invention, FIG. 6 is a table illustrating a change in a cogging torque waveform according to the width of the groove, FIG. 7 is a view illustrating an angle between a body and a shoe of the tooth not forming part of the present invention, FIG. 8 is a graph illustrating a change in cogging torque according to an angle between the body and the shoe of the tooth, FIG. 9 is a graph illustrating a change in cogging ripple according to an angle between the body and the shoe of the tooth, and FIG. 10 is a graph illustrating a change in a cogging torque wave according to an angle between the body and the shoe of the tooth.

Referring to FIGS. 2 to 10, changes in cogging torque and torque ripple caused by the groove and shoe disposed on the tooth of the stator will be described.

Referring to FIGS. 1 and 2, the stator 300 may include a stator core 310 and a coil 320. Also, in the stator 300, an insulator 330 may be disposed between the stator core 310 and the coil 320.

The stator core 310 may be formed by stacking a plurality of plates having a thin steel plate shape. Also, the stator core 310 may be formed by combining and connecting a plurality of divided cores with or to one another.

The stator core 310 may include a yoke 311, a plurality of teeth 312, and grooves 315 formed in the teeth 312. Here, the groove 315 may be referred to as a notch.

The teeth 312 protruding toward a center C may be arranged on the yoke 311. Here, when viewed in an axial view (C), the yoke 311 may have an annular shape. The coil 320 is wound on the tooth 312. The plurality of teeth 312 may be arranged at certain intervals along an inner circumferential surface of the annular yoke. Although twelve teeth 312 are shown in FIG. 2 totally, the present invention is not limited thereto and a variety of modifications may be made according to the number of poles of magnets 420.

The magnets 420 may be attached to an outer circumferential surface of a rotor core 410. An end of the tooth 312 is disposed to face the magnet 420. Here, the rotor 400 may include the rotor core 410 and a plurality of such magnets 420 arranged on the rotor core 410.

Referring to FIG. 3 which illustrates an area B of FIG. 2, the tooth 312 may include a body 313 and a shoe 314. Here, the body 313 may be referred to as a coil-wound portion. Also, the shoe 314 may be referred to as a protrusion portion.

The body 313 is a place where the coil 320 is wound. The shoe 314 is disposed on an end of the body 313. An end surface of the shoe 314 is disposed to face the magnet 420. A gap between the adjacent teeth 312 is formed as a space for winding the coil 320. Here, the winding space S means a slot S.

The shoes 314 of the adjacent teeth 312 are arranged to be separated from each other such that a slot opening O is formed. The slot opening O is an inlet of the winding space, into which a nozzle for winding the coil 320 is inserted.

The end surface of the shoe 314 may include the grooves 315. The grooves 315 may be concavely formed on the end surface of the shoe 314. Although the grooves 315 have an angular shape, the present invention is not limited thereto. Also, the groove 315 may be arranged along an axial direction of the stator core 310. In other words, the grooves 315 may be arranged lengthwise along a height direction (axial direction) of the stator core 310 from a top end to a bottom end of the stator core 310.

Two such grooves 315 may be arranged. Referring to FIGS. 2 and 3, the two grooves 315 may be arranged to be symmetrical to each other on the basis of a reference line L which passes a center of a width of the tooth 312 and the center C of the stator core 310. The grooves 315 increase a frequency of cogging torque waveforms per unit period by performing a function corresponding to that of the slot opening O, which causes a change in magnetic flux density, so as to greatly reduce the cogging torque.

Referring to FIG. 4, in the case of a motor including eight poles and twelve slots without the grooves 315, a main cogging degree corresponds to 24, which is a least common multiple of 8 which is the number of the magnets 420, and 12, which is the number of the slots. For example, in the case of a motor including 6 poles and 9 slots, a main cogging degree corresponds to 18 which is a least common multiple of 8 which is the number of magnets and 9 which is the number of slots. Here, the main cogging degree means a frequency of cogging torque waveforms per unit rotation (one rotation) of the motor. Here, the frequency refers to the number of repeated cogging torque waveforms which form peaks. Also, the number of slots corresponds to the number of the teeth 312.

In the case of a motor including 8 poles and 12 slots with two grooves 315, since the number of slots is regarded as being increased from 12 to 36 by the grooves 315, a main cogging degree increases three times from 24 to 72. Since increasing the main cogging degree three times using the two grooves 315 as described above means increasing the frequency of cogging torque waveforms, cogging torque may be greatly reduced.

Referring to FIGS. 5 and 6, a width W1 of the groove 315 is set within a range of 90% to 110% of a width W2 of the slot opening O. Here, the width W1 of the groove 315 means a distance from one side end to the other side end of an inlet of the groove 315 on the basis of a circumferential direction of the stator core 310. Also, the width W2 of the slot opening O means a distance from one side end to the other side end of an inlet of the slot opening O on the basis of the circumferential direction of the stator core 310.

As shown in FIG. 6(a), when the width W1 of the groove 315 deviates from the range of 90% to 110% of the width W2 of the slot opening O, a problem occurs in which a component of the stator, that is, a main cogging degree which is the same as the number of poles of the magnets 420, is included in a cogging torque waveform.

However, as shown in FIG. 6(b), it may be seen that when the width W1 of the groove 315 is within the range of 90% to 110% of the width W2 of the slot opening O, only cogging torque waveforms corresponding to a main cogging degree of 72 are detected.

Referring to FIG. 7, an angle θ formed by the body 313 and the shoe 314 of the tooth 312 may be 145° to 155°. In detail, an angle θ formed by a side surface 313a of the body 313 and a side surface 314a of the shoe 314 connected to the side surface 313a of the body 313 may be 145° to 155°.

Referring to FIG. 8, it may be seen that cogging torque is greatly reduced when the angle θ formed by the body 313 and the shoe 314 is within a range from 145° to 155°. Simultaneously, referring to FIG. 9, it may be seen that torque ripple is low when the angle θ formed by the body 313 and the shoe 314 is within the range from 145° to 155° and greatly increases when the angle θ deviates from the range from 145° to 155°. Particularly, it may be seen that the torque ripple rapidly increases when the angle θ is greater than 155°.

Referring to FIG. 10, it may be checked that an amplitude of cogging torque waveforms is gradually reduced as the angle θ formed by a side surface 314a of the shoe 314 goes farther from 145° toward 155°.

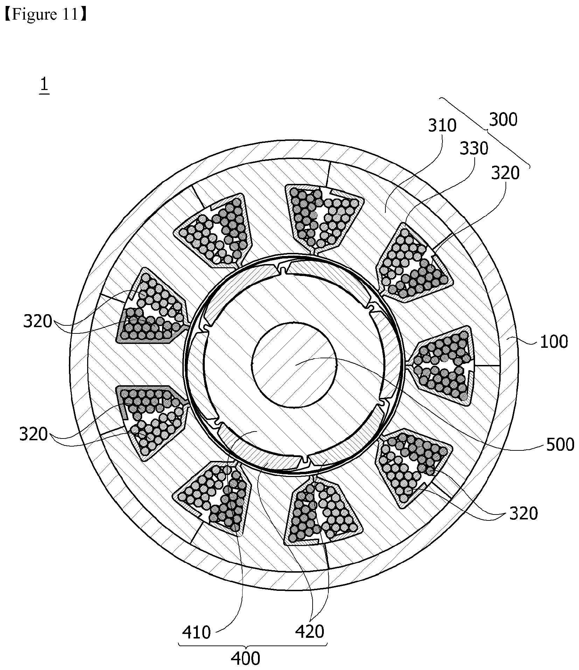

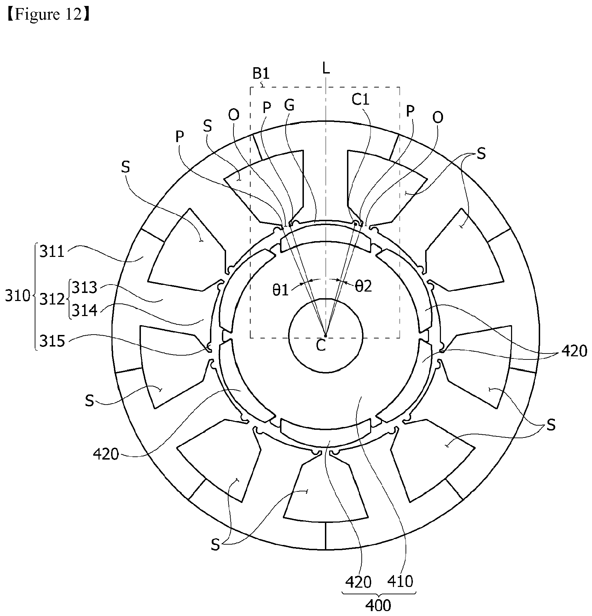

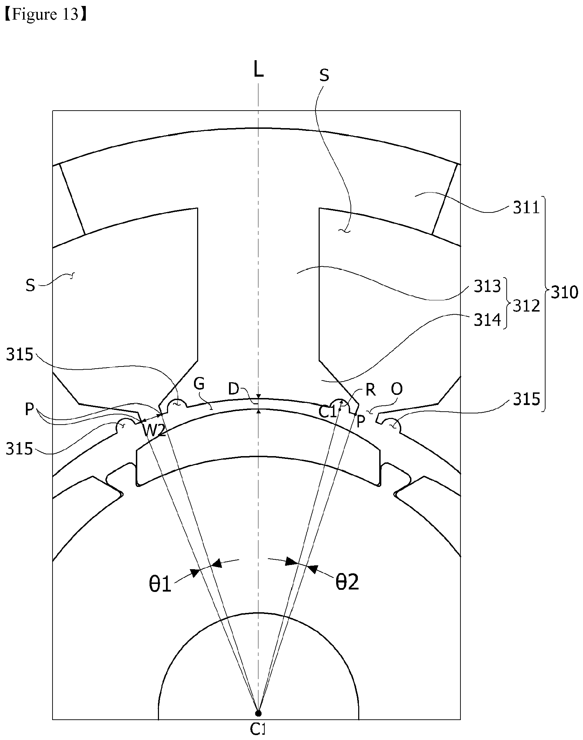

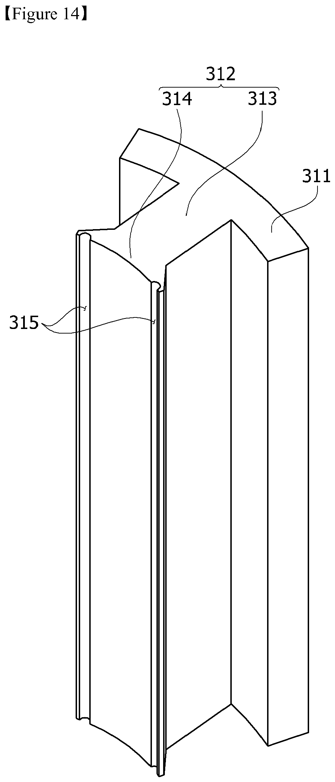

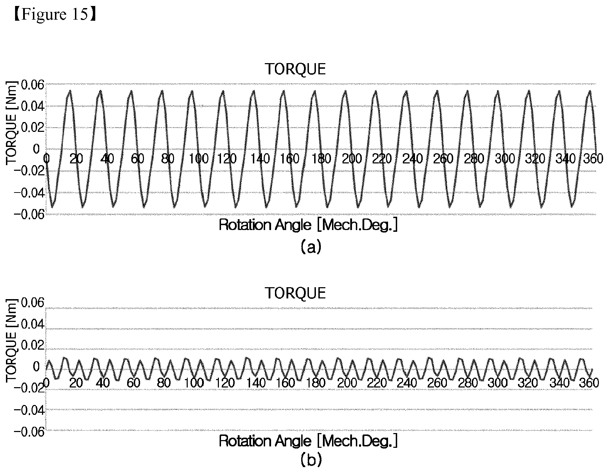

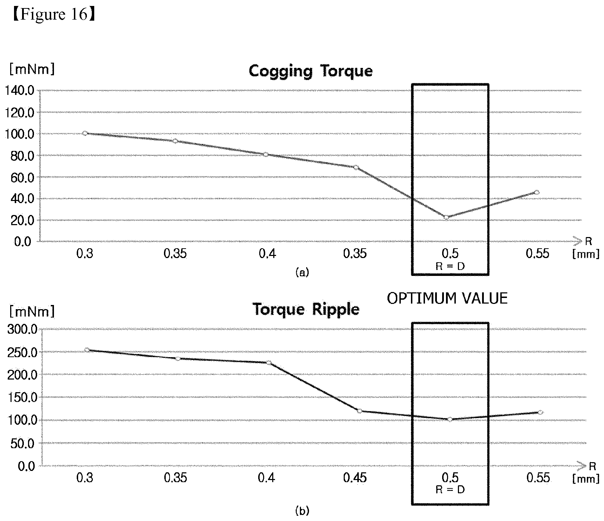

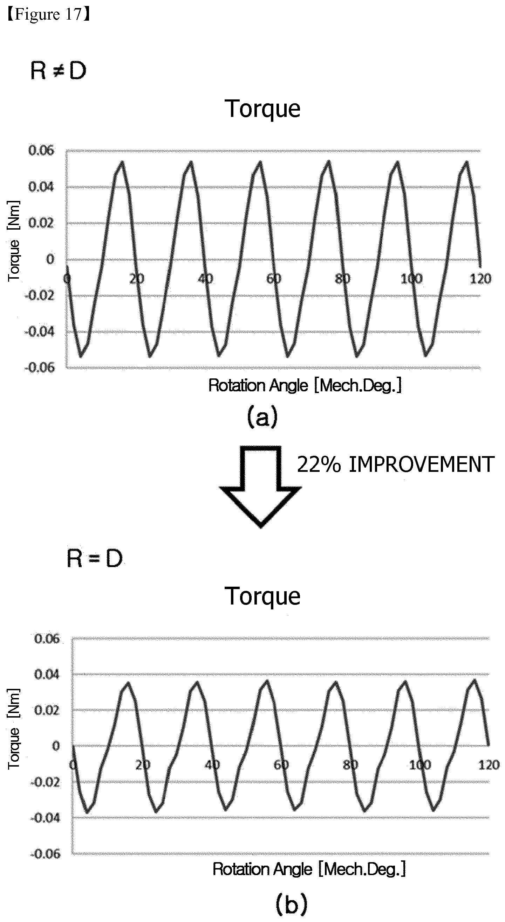

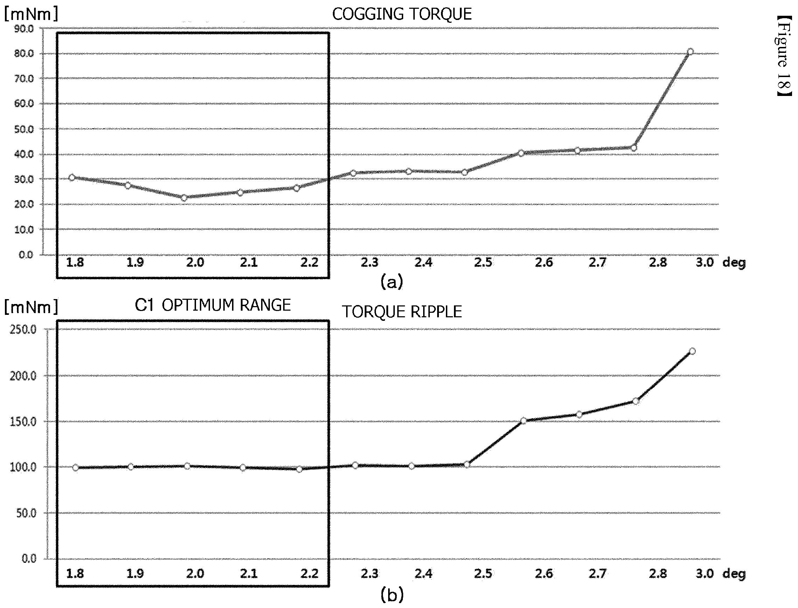

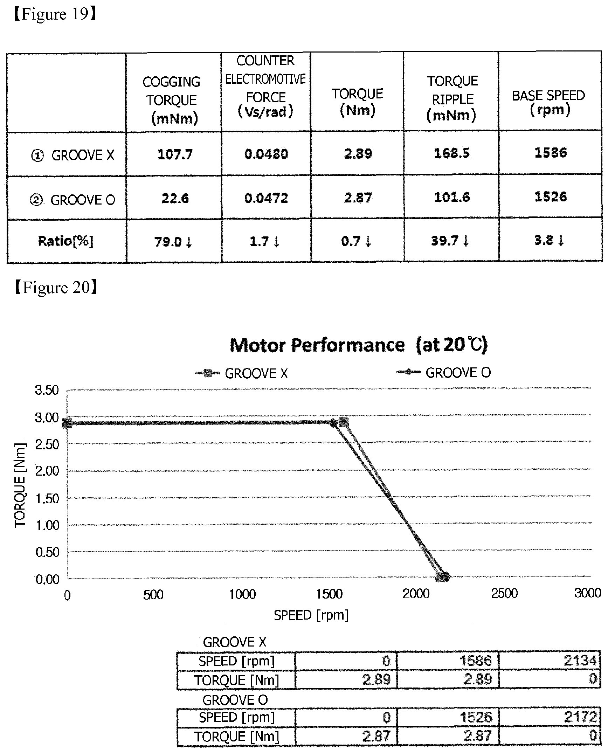

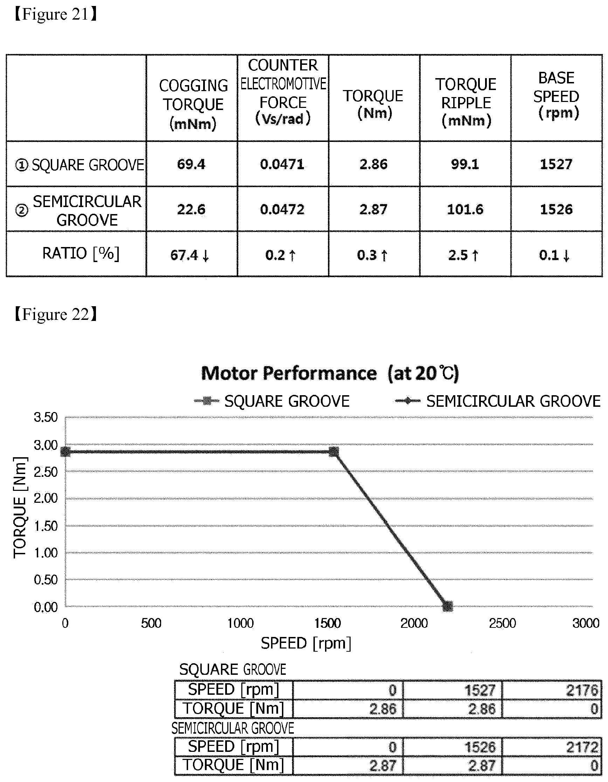

FIG. 11 is a lateral cross-sectional view of the motor taken along a line A-A of FIG. 1 not forming part of the present invention, FIG. 12 is a view illustrating an arrangement relationship between the stator core and the rotor of the motor according to the present invention, FIG. 13 is a view illustrating the stator and the rotor in an area B1 of FIG. 12, FIG. 14 is a view illustrating the tooth and the grooves of the motor according to the present invention, FIG. 15 is a view illustrating comparison between torques of the motor according to the embodiment and a motor without grooves, FIG. 16 is a view illustrating cogging torque and torque ripple according to a radius of the groove and a distance of an air gap formed in the motor according to the embodiment, FIG. 17 is a view illustrating comparison between torques according to a radius of the groove and a distance of an air gap formed in the motor according to the embodiment, FIG. 18 is a view illustrating cogging torque and torque ripple according to a position of a center C1 of the groove formed in the motor according to the embodiment, FIG. 19 is a table illustrating performance of the motor according to the embodiment and a motor without grooves, FIG. 20 is a view illustrating performance of the motor according to the embodiment and a motor without grooves at a room temperature, FIG. 21 is a table illustrating performance of the motor according to the embodiment and a motor with a square notch formed therein, and FIG. 22 is a view illustrating performance of the motor according to the embodiment and a motor with a square notch formed therein.

Referring to FIGS. 11 to 22, changes in torque, cogging torque and torque ripple caused by an air gap and grooves arranged on the tooth of the stator will be described.

Referring to FIG. 11, the stator 300 of the motor 1 may include the stator core 310, the coil 320, and the insulator 330. Also, the stator core 310 may include the yoke 311, the plurality of teeth 312, and a plurality of the grooves 315 formed in the teeth 312. Here, nine teeth 312 may be formed on the yoke 311. Also, corresponding to the teeth 312, six magnets 420 may be arranged on the rotor core 410.

Also, each of the teeth 312 may include the body 313, on which the coil 320 is wound, and the shoe 314 formed to extend from the body 313.

The yoke 311 may have a cylindrical shape.

The plurality of teeth 312 may be arranged to protrude from the yoke 311 toward the center C.

As shown in FIG. 12, the teeth 312 may be arranged at certain intervals along an inner circumferential surface of the yoke 311 to protrude toward the center C. Here, the plurality of teeth 312 may be arranged on the inner circumferential surface of the yoke 311 to be spaced at certain intervals apart.

Accordingly, a space where the coil 320 is wound may be formed between one tooth 312 and another tooth 312 which are arranged to be adjacent to each other. Here, the space means a slot S.

Also, as the shoes 314 are arranged to be spaced apart, an opening portion of the slot S may be formed. Here, the opening portion means a slot opening O.

Accordingly, the slot opening O means a space between an end point P of any one shoe 314 and an end point P of another shoe 314 adjacent thereto, and the slot opening O forms a certain angle θ1 on the basis of the center C of the rotating shaft 500. Here, the angle θ1 may be four degrees on the basis of the center C of the rotating shaft 500.

As shown in FIG. 13, the angle θ1 refers to a width W2 of the slot opening O, and the width W2 means a distance between one side and the other side of the slot opening O.

The coil 320 may be wound on the body 313. Here, the insulator 330 may be disposed on the body 313. The insulator 330 insulates the body 313 from the coil 320.

Also, the body 313 may be disposed to protrude from the yoke 311 toward the center C.

The shoe 314 may be formed to extend from an end part of the body 313. Also, the shoes 314 may be arranged to face the magnets 420.

Also, the plurality of grooves 315 may be arranged on the shoe 314. When viewed in an axial view, the groove 315 may have a semicircular shape. As shown in FIG. 12, the shoes 314 may be arranged to face the magnets 420 while being spaced at a certain interval apart from the magnets 420. Accordingly, an air gap G may be formed between an inner surface of the shoe 314 and an outer surface of the magnet 420.

Here, the air gap G may mean a distance between the shoes 314 and the rotor 400. Preferably, the air gap G may mean a distance between the shoes 314 and the magnets 420. Here, an inside may mean a direction of being arranged to face the center C on the basis of the center C, and an outside may mean a direction opposite to the inside.

The two grooves 315 may be on the shoe 314. Here, the two grooves 315 may be arranged to be symmetrical to each other on the basis of a reference line L which passes a center of a width of the shoe 314 and the center C of the stator core 310.

The grooves 315 perform a function of reducing a change in static magnetic energy (variation) by performing a function corresponding to the slot openings O which cause a change in magnetic flux density. Accordingly, the grooves 315 greatly reduce cogging torque by increasing a frequency of cogging torque waveforms per unit period.

FIG. 15 is a view illustrating comparison between torques of the motor according to the embodiment and a motor without grooves. FIG. 15(a) illustrates pulsation of the motor without grooves, and FIG. 15(b) illustrates pulsation of the motor according to the embodiment.

Referring to FIG. 15, since torque pulsation (repeated torque waveforms) with respect to cogging torque and torque ripple may be calculated as a least common multiple of the number of poles (magnets) and the number of slots, in the case of a motor including 6 poles and 9 slots without the groove 315 as shown in FIG. 15(a), 18, which is a least common multiple, corresponds to pulsation. Here, the pulsation may mean the number of repeated waveforms which form peaks.

Also, in the case of the motor 1 according to the embodiment as shown in FIG. 15(b), since the two grooves 315 are formed on each of the shoes 314, 54, which is a least common multiple of 6 poles and 27 slots, may correspond to pulsation.

Accordingly, since a frequency of pulsation increases three times, the motor 1 may greatly reduce cogging torque.

Meanwhile, the grooves 315 may be formed toward the rotating shaft 500. As shown in FIG. 14, the grooves 315 may be arranged lengthwise along a height direction (axial direction) from a top end to a bottom end of the stator core 310. Here, the grooves 315 may have a semicylindrical shape.

Accordingly, as shown in FIGS. 12 and 13, a lateral cross section of the groove 315 may have a semicircular shape. Accordingly, the groove 315 may be formed to have a certain radius R on the basis of the center C1 of the groove 315.

Accordingly, since a length of a magnetic path is equal in a lateral direction (a radial direction), the semicircular groove 315 is advantageous for reducing cogging torque. Here, the lateral direction may be perpendicular to the axial direction.

FIG. 16 is a view illustrating cogging torque and torque ripple according to a radius of the groove and a distance of an air gap formed in the motor according to the embodiment. FIG. 16(a) is a view illustrating cogging torque according the radius of the groove and the distance of the air gap, and FIG. 16(b) is a view illustrating torque ripple according to the radius of the groove and the distance of the air gap.

FIG. 17 is a view illustrating comparison between torques according to the radius of the groove and the distance of the air gap formed in the motor according to the embodiment. FIG. 17(a) is a view illustrating torque of the motor when the radius of the groove is different from the distance of the air gap, and FIG. 17(b) is a view illustrating torque of the motor when the radius of the groove is from the same as the distance of the air gap.

Meanwhile, a radius R of the groove 315 may be formed corresponding to a distance D of the air gap G. Here, the distance D of the air gap G may be a distance between the shoe 314 and the center of the width of the magnet 420.

Meanwhile, the radius R of the groove 315 may be formed within a range of 0.9 to 1.1 in proportion to the distance D of the air gap G. That is, the radius R of the groove 315 may be determined within a range of ±10% of the distance D of the air gap G. Preferably, the radius R of the groove 315 may be formed to be equal to the distance D of the air gap G.

As shown in FIG. 16(a), cogging torque rapidly decreases when the radius R of the groove 315 is 0.45 mm and is located in a lowest position when the radius R of the groove 315 is 0.5 mm which is equal to the distance D of the air gap G. Then, an increase of the radius R of the groove 315 to 0.55 mm may be seen.

That is, cogging torque rapidly decreases when the radius R of the groove 315 is 0.9 in proportion to the distance D of the air gap G and is located in a lowest position when the radius R of the groove 315 is equal to the distance D of the air gap G. Then, an increase of the radius R of the groove 315 to 1.1 in proportion to the distance D of the air gap G may be seen.

Accordingly, the cogging torque has a lowest value when the radius R of the groove 315 is equal to the distance D of the air gap G.

As shown in FIG. 16(b), it may be seen that torque ripple maintains a low value when the radius R of the groove 315 is 0.45 mm to 0.55 mm. That is, it may be seen that the torque ripple rapidly decreases when the radius R of the groove 315 is 0.4 mm and is smoothly maintained when the radius R of the groove 315 is 0.45 mm to 0.55 mm.

Here, the torque ripple is located in a lowest position when the radius of the groove 315 is equal to the distance D of the air gap G. That is, the cogging ripple has a lowest value when the radius R of the groove 315 is 0.5 mm, which is equal to the distance D of the air gap G.

Accordingly, it may be seen that the torque ripple maintains a low value when the radius R of the groove 315 is 0.9 to 1.1 in proportion to the distance D of the air gap G. That is, it may be seen that the torque ripple rapidly decreases when the radius R of the groove 315 is 0.8 in proportion to the distance D of the air gap and the torque ripple is smoothly maintained when the radius R of the groove 315 is 0.9 to 1.1 in proportion to the distance D of the air gap.

Accordingly, the torque ripple has a lowest value when the radius R of the groove 315 is equal to the distance D of the air gap G.

Referring to FIG. 17, it may be seen that in comparison to a case in which the radius R of the groove 315 is different from the distance D of the air gap G, the torque of the motor 1 is improved 22% when the radius R of the groove 315 is equal to the distance D of the air gap G.

That is, cogging torque may be reduced by designing the radius R of the groove 315 to be equal to the distance D of the air gap G.

Meanwhile, referring to FIGS. 12 and 13, the center C1 of the groove 315 may be disposed to be spaced at a certain angle θ2 in a circumferential direction apart from one side end point P of the shoe 314. Here, the angle θ2 means a distance between the one side end point P of the shoe 314 and the center C1 of the groove 315. Additionally, the angle θ2 refers to a position of the center C1 of the groove 315 in relation to the angle θ1 of the slot opening O. Here, for clarity, the angle θ2 may be referred to as a second angle θ2, and the angle θ1 may be referred to as a first angle θ1.

The second angle θ2 may be formed within a range of 0.45 to 0.55 in proportion to the first angle θ1. For example, when the first angle θ1 is 4 degrees, the second angle θ2 may be formed within a range of 1.8 degrees to 2.2 degrees. Preferably, the second angle θ2 may be formed to be 2.0 degrees.

Accordingly, the center C1 of the groove 315 may be formed to be 0.45 to 0.55 from the one side end point P in proportion to the first angle θ1. Preferably, the center C1 of the groove 315 may be formed to be 0.5 from the one side end point P of the shoe 314 in proportion to the first angle θ1.

FIG. 18 is a view illustrating cogging torque and torque ripple according to the position of the center C1 of the groove formed in the motor according to the embodiment. Here, the number of the grooves 315 is 2, the radius R of the groove 315 and the distance D of the air gap G are the same as 0.5 mm, and the first angle θ1 of the slot opening O is four degrees.

As shown in FIG. 18(a), cogging torque increases at an inflection point when a position of the center C1 of the groove 315 is located at an angle of 2.0 degrees from the one side end point P of the shoe 314.

Accordingly, when the position of the center C1 of the groove 315 is present within a range of 1.8 degrees to 2.2 degrees from the one side end point P of the shoe 314, the motor 1 may perform effective performance. Preferably, when the position of the center C1 of the groove is located at 2.0 degrees from the one side end point P of the shoe 314, the cogging torque has a lowest value such that the motor 1 may perform optimum performance.

As shown in FIG. 18(b), a torque ripple value is maintained at about 100 mNm when a position of the center C1 of the groove 315 is located within a range of 1.8 degrees to 2.5 degrees from the one side end point P of the shoe 314.

Accordingly, in consideration of cogging torque and torque ripple of the motor 1, a range of the center C1 of the groove 315 located at 1.8 degrees to 2.2 degrees from the one side end point P of the shoe 314 may be checked as an optimum range. Particularly, when the position of the center C1 of the groove 315 is located at 2.0 degrees from the one side end point P of the shoe 314, the cogging torque has a lowest value such that the motor 1 may perform optimum performance.

Hereinafter, referring to FIGS. 19 to 22, performance of the motor 1 will be described.

Referring to FIGS. 19 and 20, it may be seen that in comparison to a motor without grooves, when the grooves 315 are included as in the motor 1, cogging torque is reduced 79% and torque ripple is reduced 39.7%. Also, it may be seen that variation of values other than the cogging torque and the torque ripple are insignificant.

Accordingly, in the case of the motor 1, in comparison with a motor without grooves, quality may be increased by reducing cogging torque and torque ripple while performance is indifferent from that of the motor without grooves.

Referring to FIGS. 21 and 22, it may be seen that in comparison to a motor with square notches, when the above-described semicircular grooves 315 are included as in the motor 1, cogging torque is reduced 67.4% and torque ripple is increased 2.5%. Also, it may be seen that variation of values other than the cogging torque and the torque ripple are insignificant.

Here, the square notch has a difference between a length of one side and a length of a diagonal line. Particularly, based on a center of the square notch, a difference is present between a length of a side in a semidiameter direction (radial direction) and a diagonal line.

That is, since the square notches have a difference in directional lengths of a magnetic path, the semicircular grooves 315 of the motor 1 are more effective in an aspect of cogging torque.

Accordingly, in the case of the motor 1, in comparison with the motor with square notches, quality may be increased by reducing cogging torque while performance is indifferent from that of the motor without a groove.

Although an exemplary embodiment of the present invention has been described above, it should be understood by one of ordinary skill in the art that a variety of modifications and a variety of changes may be made without departing from the scope of the present invention which is defined in the following claims.

### <Description of Reference Numerals>

1: motor, 10: bearing, 100: housing, 200: bracket, 300: stator, 310: stator core, 311: yoke, 312: tooth, 313: body, 314: shoe, 315: groove, 320: coil, 400: rotor, 410: rotor core, 420: magnet, 500: rotating shaft, 600: sensing magnet assembly, 700: PCB.

## Claims

1. A motor comprising:
a rotating shaft (500);
a rotor (400) comprising a rotor core (410) and magnets (420) arranged on an outer circumferential surface of the rotor core and a hole into which the rotating shaft (500) is inserted; and
a stator (300) disposed outside the rotor (400),
wherein the stator (300) comprises:
a stator core (310) which comprises a plurality of teeth (312); and
a coil (320) wound on each of the plurality of teeth (312),
wherein each of the plurality of teeth (312) comprises a body (313), on which the coil (320) is wound, and a shoe (314) connected to the body (313),
wherein the shoe (314) comprises a plurality of semicircular grooves (315), the grooves (315) being formed toward the rotating shaft (500), the grooves (315) being arranged lengthwise along an axial direction from a top end to a bottom end of the stator core (310), the grooves (315) having a semicylindrical shape, a lateral cross section of the grooves (315) having a semicircular shape,
wherein the shoe (314) is arranged to face a magnet (420) of the rotor (400), an air gap (G) being formed between an inner surface of the shoe (314) and an outer surface of the magnet (420),
wherein the number of the grooves (315) is two, and wherein the two grooves (315) are arranged to be symmetrical to each other on the basis of a reference line (L) which passes a center of a width of the shoe (314) based on a circumferential direction and a center of the stator core (310),
**characterized in that**
a center (C1) of a lateral cross section of the groove (315) is disposed to be spaced at a certain angle θ2 apart from one side end point (P) of the shoe (314) in a circumferential direction, on the basis of the center (C) of the rotating shaft,
wherein the angle θ2 is 0.45 to 0.55 of an angle θ1 formed by a slot opening (O) being a space between an end point of the shoe (314) and an end point of another shoe (314) adjacent thereto, on the basis of the center (C) of the rotating shaft,
wherein the radius (R) of the groove (315) is 0.9 to 1.1 of a distance (D) of the air gap (G) between the inner surface of the shoe (314) and the outer surface of the magnet (420) at the center of the width of the magnet (420).

2. The motor of claim 1, wherein the angle θ2 is 0.5 of the angle θ1.

3. The motor of any one of claims 1 to 2, wherein the radius (R) of the groove (315) is equal to the distance (D) of the air gap (G) between the inner surface of the shoe (314) and the outer surface of the magnet (420) at the center of the width of the magnet (420).

4. The motor of any one of claims 1 to 3, wherein an angle formed by a side surface (313a) of the body (313) and a side surface (314a) of the shoe (314), which is connected to the side surface (313a) of the body (313), is 145° to 155°.

5. The motor of claim 1, wherein nine teeth (312) are formed on a yoke (311) of the stator core (310), and
wherein six magnets (420) are arranged on the rotor core (410) of the rotor (400).

## Patentansprüche

1. Motor, umfassend:
eine rotierende Welle (500);
einen Rotor (400), der einen Rotorkern (410) und Magnete (420), die an einer Außenumfangsfläche des Rotorkerns angeordnet sind, und eine Bohrung, in die die rotierende Welle (500) eingeführt ist, umfasst; und
einen Stator (300), der sich außerhalb des Rotors (400) befindet,
wobei der Stator (300) umfasst:
einen Statorkern (310), der mehrere Zähne (312) umfasst; und
eine auf jeden der mehreren Zähne (312) gewickelte Spule (320),
wobei jeder der mehreren Zähne (312) einen Körper (313) umfasst, auf den die Spule (320) gewickelt ist, und einen mit dem Körper (313) verbundenen Schuh (314),
wobei der Schuh (314) mehrere halbkreisförmige Einkerbungen (315) umfasst, die Einkerbungen (315) in Richtung der rotierenden Welle (500) ausgebildet sind, die Einkerbungen (315) der Länge nach von einem oberen Ende zu einem unteren Ende des Statorkerns (310) entlang einer Axialrichtung angeordnet sind, die Einkerbungen (315) eine halbzylindrische Form aufweisen, ein lateraler Querschnitt der Einkerbungen (315) eine halbkreisförmige Form aufweist,
wobei der Schuh (314) so angeordnet ist, dass er einem Magnet (420) des Rotors (400) gegenüberliegt, wobei eine Luftspalte (G) zwischen einer Innenfläche des Schuhs (314) und einer Außenfläche des Magnets (420) gebildet ist,
wobei die Anzahl der Einkerbungen (315) zwei beträgt und wobei die zwei Einkerbungen (315) so angeordnet sind, dass sie basierend auf einer Referenzlinie (L), die durch eine Mitte einer Breite des Schuhs (314) basierend auf einer Umfangsrichtung und eine Mitte des Statorkerns (310) verläuft, symmetrisch zueinander sind,
**dadurch gekennzeichnet, dass**
eine Mitte eines lateralen Querschnitts der Einkerbung (315) so angeordnet ist, dass sie basierend auf der Mitte (C) der rotierenden Welle in einer Umfangsrichtung von einem Seitenendpunkt (P) des Schuhs (314) in einem bestimmten Winkel θ2 beabstandet ist,
wobei der Winkel θ2 0,45 bis 0,55 eines Winkels θ1 beträgt, der durch eine Schlitzöffnung (O), die ein Abstand zwischen einem Endpunkt des Schuhs (314) und einem diesem benachbarten Endpunkt eines anderen Schuhs (314) ist, basierend auf der Mitte (C) der rotierenden Welle gebildet ist,
wobei der Radius (R) der Einkerbung (315) 0,9 bis 1,1 einer Distanz (D) des Luftspalts (G) zwischen der Innenfläche des Schuhs (314) und der Außenfläche des Magnets (420) an der Mitte der Breite des Magnets (420) beträgt.

2. Motor nach Anspruch 1, wobei der Winkel θ2 0,5 des Winkels θ1 beträgt.

3. Motor nach einem der Ansprüche 1 bis 2, wobei der Radius (R) der Einkerbung (315) gleich der Distanz (D) des Luftspalts (G) zwischen der Innenfläche des Schuhs (314) und der Außenfläche des Magnets (420) an der Mitte der Breite des Magnets (420) ist.

4. Motor nach einem der Ansprüche 1 bis 3, wobei ein Winkel, der durch eine Seitenfläche (313a) des Körpers (313) und einer Seitenfläche (314a) des Schuhs (314), die mit der Seitenfläche (313a) des Körpers (313) verbunden ist, gebildet wird, 145° bis 155° beträgt.

5. Motor nach Anspruch 1, wobei neun Zähne (312) an einem Joch (311) des Statorkerns (310) gebildet sind, und
wobei sechs Magnete (420) am Rotorkern (410) des Rotors (400) angeordnet sind.

## Revendications

1. Moteur comprenant :
un arbre rotatif (500) ;
un rotor (400) comprenant un noyau de rotor (410) et des aimants (420) agencés sur une surface circonférentielle extérieure du noyau de rotor et un trou dans lequel l'arbre rotatif (500) est inséré ; et
un stator (300) disposé à l'extérieur du rotor (400),
dans lequel le stator (300) comprend :
un noyau de stator (310) qui comprend une pluralité de dents (312) ; et
une bobine (320) enroulée sur chacune de la pluralité de dents (312),
dans lequel chacune de la pluralité de dents (312) comprend un corps (313), sur lequel la bobine (320) est enroulée, et un sabot (314) relié au corps (313),
dans lequel le sabot (314) comprend une pluralité de rainures semi-circulaires (315), les rainures (315) étant formées en direction de l'arbre rotatif (500), les rainures (315) étant agencées dans le sens de la longueur le long d'une direction axiale à partir d'une extrémité supérieure vers une extrémité inférieure du noyau de stator (310), les rainures (315) présentant une forme semi-cylindrique, une section transversale latérale des rainures (315) présentant une forme semi-circulaire,
dans lequel le sabot (314) est agencé pour être tourné vers un aimant (420) du rotor (400), un entrefer (G) étant formé entre une surface intérieure du sabot (314) et une surface extérieure de l'aimant (420),
dans lequel le nombre des rainures (315) est deux, et dans lequel les deux rainures (315) sont agencées pour être symétriques l'une par rapport à l'autre sur la base d'une ligne de référence (L) qui passe par un centre d'une largeur du sabot (314) sur la base d'une direction circonférentielle et un centre du noyau de stator (310), **caractérisé en ce que**
un centre (C1) d'une section transversale latérale de la rainure (315) est disposé pour être espacé à un certain angle θ2 d'un point d'extrémité latéral (P) du sabot (314) dans une direction circonférentielle, sur la base du centre (C) de l'arbre rotatif,
dans lequel l'angle θ2 est 0,45 à 0,55 d'un angle θ1 formé par une ouverture à fente (O) qui est un espace entre un point d'extrémité du sabot (314) et un point d'extrémité d'un autre sabot (314) adjacent à celui-ci, sur la base du centre (C) de l'arbre rotatif,
dans lequel le rayon (R) de la rainure (315) est 0,9 à 1.1 d'une distance (D) de l'entrefer (G) entre la surface intérieure du sabot (314) et la surface extérieure de l'aimant (420) au centre de la largeur de l'aimant (420) .

2. Moteur selon la revendication 1, dans lequel l'angle θ2 est 0,5 de l'angle θ1.

3. Moteur selon l'une quelconque des revendications 1 à 2, dans lequel le rayon (R) de la rainure (315) est égal à la distance (D) de l'entrefer (G) entre la surface intérieure du sabot (314) et la surface extérieure de l'aimant (420) au centre de la largeur de l'aimant (420) .

4. Moteur selon l'une quelconque des revendications 1 à 3, dans lequel un angle formé par une surface latérale (313a) du corps (313) et une surface latérale (314a) du sabot (314), qui est reliée à la surface latérale (313a) du corps (313), est 145° à 155°.

5. Moteur selon la revendication 1, dans lequel neuf dents (312) sont formées sur une culasse (311) du noyau de stator (310), et
dans lequel six aimants (420) sont agencés sur le noyau de rotor (410) du rotor (400).
